(19) Europäisches Patentamt
European Patent Office
Office européen des brevets

(11) Publication number: **0 617 277 A1**

(12) # EUROPEAN PATENT APPLICATION

(21) Application number: **94104331.7**

(51) Int. Cl.$^5$: **G01N 27/333**

(22) Date of filing: **18.03.94**

(30) Priority: **25.03.93 JP 66424/93**

(43) Date of publication of application:
**28.09.94 Bulletin 94/39**

(84) Designated Contracting States:
**DE GB**

(71) Applicant: **HITACHI, LTD.**
**6, Kanda Surugadai 4-chome**
**Chiyoda-ku, Tokyo 100 (JP)**

(72) Inventor: **Yamashita, Koutarou 328,**
**Dainikyoushinryo**
**1-3, Higashikoigakubo-3-chome**
**Kokubunji-shi, Tokyo (JP)**
Inventor: **Ozawa, Satoshi**
**2-3-101, Iguchi-5-chome**
**Mitaka-shi (JP)**
Inventor: **Miyahara, Yuji**
**3-5, Daiharacho-2-chome**
**Hitachi-shi (JP)**
Inventor: **Taki, Mamoru**
**3217-14, Omiyamachi,**
**Naka-gun**
**Ibaraki-ken (JP)**
Inventor: **Watanabe, Yoshio**
**6-5, Honcho-4-chome**
**Kokubunji-shi (JP)**

(74) Representative: **Strehl Schübel-Hopf Groening & Partner**
**Maximilianstrasse 54**
**D-80538 München (DE)**

(54) **Ion-selective electrode and process for preparing the same.**

(57) An ion-selective electrode comprises an inner solid state electrode (3) in a layer structure of metal/metal salt composed of a conductive layer (6) of a metal and a layer (7) of a water-insoluble salt of the metal in contact with the conductive layer and an ion-selective membrane (4) whose matrix membrane is composed of a hydrophobic polymeric material. The anion of the water-insoluble salt is selected from the group consisting of tetraphenylborate ion, derivatives of the tetraphenylborate ion, tetraalkylborate ion and derivatives of the tetraalkylborate ion. The electrode has a stable electrode performance for a prolonged time, especially a remarkable stability when the ion-selective membrane (4) is a potassium ion-selective membrane or a sodium ion-selective membrane and the inner solid state electrode (3) is formed by electrodeposition of the layer of the water-insoluble salt of the metal onto the surface of the metal in a solution of the water-insoluble salt of the metal with the anion in an organic solvent having a relative dielectric constant of 20 or more.

FIG. 1

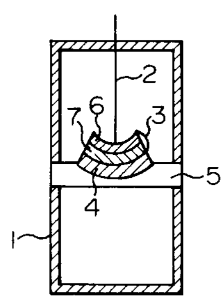


EP 0 617 277 A1

## BACKGROUND OF THE INVENTION

### a) FIELD OF THE INVENTION

The present invention relates to an ion-selective electrode suitable for analysis of ion species contained in a biological fluid, and more particularly to an ion-selective electrode suitable for analysis of potassium ion, sodium ion, halide ion or carbonate ion by potentiometric determination.

### b) RELATED ART

The ion-selective electrode is characterized by selectively determining concentrations of specific ion species in a solution and has been employed in various fields including concentration monitoring of specific ion species, water analysis, etc. Particularly in the medical field it is applied to quantitatively determine ion species in blood or biological solutions such as urine, etc., for example, chloride ions, potassium ions, etc. Since concentrations of specific ion species in a biological solution are closely related to metabolic reactions of living bodies, diseases for high blood pressure, diseases for kidney, diseases for neurosystem, etc. are diagnosed by determining concentrations of specific ion species.

Between an activity a of ion species to be determined and an electrode potential E given by an ion-selective electrode, a correlation that the logarithm of activity a is proportional to a change in the electrode potential E is established as shown by the following equation:

$$E = E_0 + 2.303(RT/ZF) \log a$$

and the activity a of ion species to be determined can be simply calculated from measurements of the electrode potential E. In the foregoing equation, R is a gas constant, T an absolute temperature, Z a valency, F a Faraday constant, $E_0$ a standard potential of the system and log the common logarithm. With the ion selective electrode, concentrations of ion species existing in a solution can be determined in a broad concentration range only by measuring the electrode potential.

Generally, an ion-selective electrode comprises an electrode body filled with an inner solution, a silver/silver chloride inner electrode being dipped in the inner solution, an ion-selective membrane being fixed to one open end of the electrode body. The ion-selective membrane is in contact with a biological fluid as a sample on the outside of the electrode body, while an aqueous electrolyte solution or an agarose gel containing a supporting electrolyte is used as the inner solution serving to conduct electricity between the ion-sensitive membrane and the inner electrode (Analytical Chemistry, Vol. 52, No. 4, pp. 692-700 (1980).

An ion-selective electrode of such a type as not to use the inner solution is known, and a coated wire electrode (CWE) is known as an ion-selective electrode having such a structure that an ion-selective membrane is directly formed on an inner electrode (ION-SELECTIVE ELECTRODE IN ANALYTICAL CHEMISTRY VOLUME 2, Edited by Henry Freiser, Chapter 2 (pp. 85-105), PLENUM PRESS, NEW YORK (1980)). CWE is simple in the electrode preparation, handling, maintenance, etc. and has been intensively studied.

Generally, the silver/silver chloride electrode has been so far used as an inner solid state electrode for the ion-selective electrode, but has such problems that the electrode potential drift is large and the electrode potential stability is not satisfactory when used for a prolonged time. The electrode potential drift is a fluctuation with time in electrode potential generated on the ion-selective electrode in contact with a solution containing ion species to be determined.

## SUMMARY OF THE INVENTION

An object of the present invention is to provide an ion-selective electrode having good electrode potential stability and electrode performance for a practically prolonged time, and a process for preparing the ion-selective electrode.

According to the present invention, there is provided an ion-selective electrode which comprises an ion-selective membrane whose matrix membrane is composed of a hydrophobic polymeric material, an inner solid state electrode and an electrode body encasing the ion-selective membrane and the inner solid state electrode, the inner solid state electrode having a metal/metal salt structure comprising a conductive layer of a metal and a layer of a water-insoluble salt of the metal, the conductive layer being in contact with the layer of the water-insoluble salt of the metal, the water-insoluble salt of the metal having an anion (1) in the

following structure:

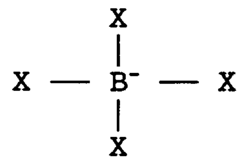

(1)

wherein Xs of the anion (1) are members selected from the group consisting of phenyl groups ($C_6H_5$); halogenated phenyl groups, where at least one of hydrogen atoms H each in the phenyl groups ($C_6H_5$) is replaced with halogen atom or atoms Y, wherein Y is F, Br, Cl or I; alkyl groups ($C_nH_{2n+1}$; n = 1 to 10); halogenated alkyl groups ($C_nY_{2n+1}$; n = 1 to 10) where all the hydrogen atoms H each of the alkyl groups ($C_2H_{2n+1}$, n = 1 to 10) are replaced with halogen atoms Y, wherein Y is F, Br, Cl or I; and substituted phenyl groups where at least one of hydrogen atoms H each in phenyl groups ($C_6H_5$) is replaced with at least one halogenated alkyl group ($C_nY_{2n+1}$; n = 1 to 10), where all the hydrogen atoms H each of the alkyl groups ($C_2H_{2n+1}$; n = 1 to 10) are replaced with halogen atoms Y, wherein Y is F, Br, Cl or I. That is, the anion of the water-insoluble salt of the metal is one member selected from the group consisting of tetraphenylborate ion, derivatives of the tetraphenylborate ion, tetraalkylborate ion, and derivatives of the tetraalkylborate ion, to constitute the metal/metal salt structure of the inner solid state electrode.

An equilibrium potential is developed at the interface between the ion-selective membrane whose matrix membrane is composed of a hydrophobic polymeric material and the inner solid state electrode. It seems that the equilibrium potential is generated mainly due to such a phenomenon that ionized metal ions from the inner solid state electrode reach a partition equilibrium at the interface between the hydrophobic ion-selective membrane and the inner solid state electrode. The inner solid state electrode of the present ion-selective electrode is composed of a metal salt of anions having a high hydrophobicity and the partition equilibrium is rapidly established at the interface between the hydrophobic ion-selective membrane and the inner solid state electrode. Thus, the electrode potential drift is reduced. As a result, an ion-selective electrode having good electrode potential stability and electrode performance for a prolonged time with less fluctuation with time can be obtained. Furthermore, the exactness which is characteristic of the ion-selective electrode can be improved, resulting in prolonged use and better repeatability of the ion-selective electrode.

## BRIEF DESCRIPTION OF THE DRAWINGS

Fig. 1 is a cross-sectional schematic view showing the structure of the present ion-selective electrode.

Fig. 2 is a diagram showing comparison of changes in the electrode potential with time between the present ion-selective electrode and a conventional ion-selective electrode.

Fig. 3 is a diagram showing comparison of changes in slope with time between the present ion-selective electrode and a conventional ion-selective electrode.

Fig. 4 is a diagram showing comparison of changes in the electrode potential drift between the present ion-selective electrode and a conventional ion-selective electrode.

## DETAILED DESCRIPTION OF THE INVENTION

Structure of the electrode common to those used in the following Examples will be described.

Fig. 1 is a cross-sectional schematic view showing the structure of the present ion-selective electrode. A box-shaped electrode body 1 is provided with a channel 5 through which a biological solution is passed as a sample. The channel 5 has an opening on part of the wall, and the present ion-selective electrode is provided at the opening of the wall. The ion-selective electrode is in a laminated structure comprising an inner solid state electrode 3 in a layer structure of metal/metal salt composed of a conductive layer 6 of a metal and a layer 7 of a water-insoluble salt of the metal, and an ion-selective membrane 4 whose matrix membrane is composed of a hydrophobic polymeric material. The ion-selective membrane 4 is fixed at the opening on the wall of the channel 5 so as to come in contact with a biological solution as a sample. A lead wire 2 for potential measurement is connected to the conductive layer 6 of the metal in the inner solid state electrode 3.

The ion-selective membrane can select a specific ion species. That is, the ion-selective membrane can selectively transport only a specific ion species through the membrane from a sample solution containing

the ion species to be quantitatively determined or can respond to the specific ion species. Since the sample solution is an aqueous solution, the ion-selective membrane must be water-insoluble, irrespective of the hydrophilicity or hydrophobicity.

The ion-selective membrane can be prepared according to a known method. For example, a solution of an ion carrier and an organic binder in a solvent is applied onto a layer of a water-insoluble salt, or an electrolyte layer or a conductive layer, and dried. An ion carrier concentration is usually 0.05-10 g/$m^2$, and the thickness of the ion-selective membrane is preferably 10-500 $\mu$m.

As an organic binder for use in the ion-selective membrane, natural or synthetic polymers capable of forming a film capable of allowing an ionophore or an ionophore solvent to migrate therethrough with a sufficient ion transportability therethrough. Specifically, the organic binder is preferably selected from the group consisting of polyvinyl chloride, polyvinylidene chloride, polyacrylonitrile, polyurethane, polyvinyl chloride/polyvinyl acetate copolymer, polyvinyl chloride/polyvinylidene chloride copolymer, polyvinyl acetate, silicone elastomer, polyvinyl alcohol, cellulose ester and polycarbonate.

The ion carrier for use in the ion-selective membrane is a substance capable of forming pairs with alkali metal ion species, alkaline earth metal ion species, etc. to be determined. Potassium ion carrier is preferably selected from the group consisting of valinomicin, circular polyether, tetralactone, macrolideactin, enniatin, potassium tetraphenylborate, and their derivatives. Sodium ion carrier is preferably selected from the group consisting of sodium monensin, methyl monensin, circular polyether, tetralactone, macrolideactin, enniatin, sodium tetraphenylborate and their derivatives. As a material for the ion-selective membrane, an ion exchanger can be used, where a potential difference due to a change in the ion activity in a sample solution as a result of ion exchange is measured. Preferable ion exchanger is a quaternary borate or a quaternary ammonium salt.

It is desirable that the carrier solvent is sufficiently water-insoluble and non-volatile, and preferably includes a phthalate, a sebacate, an aromatic or aliphatic ether, and an adipate. Specifically useful carrier solvent include, for example, bromophenylphenyl ether, 3-methoxyphenylphenyl ether, 4-methoxyphenylphenyl ether, dimethyl phthalate, dibutyl phthalate, didodecyl phthalate, dioctylphenyl phosphate, bis(2-ethylhexyl) phthalate, octyldiphenyl phosphate, dioctyl adipate and dibutyl sebacate.

Generally, the inner solid state electrode is in such a structure that a metal is in contact with a water-insoluble salt of the metal, for example, such a structure as represented by Ag/AgY, where Y is a halogen such as F, Br, Cl or I, which can be prepared by dipping a silver layer as a wire or a plate into an aqueous solution of a halide.

The present ion-selective electrode is characterized by an inner solid state electrode in a layer structure of metal/metal salt comprising a conductive layer of a metal and a layer of a water-insoluble salt of the metal in contact with the conductive layer, where the anion of the water-insoluble salt is selected from the group consisting of tetraphenylborate ion, derivatives of the tetraphenylborate ion, tetraalkylborate ion and derivatives of the tetraalkylborate ion. The salt of a metal as a water-insoluble salt for use in the present invention is a salt of a metal with an acid selected from the group consisting of tetraphenylboric acid, derivatives of the tetraphenylboric acid, tetraalkylboric acid and derivatives of the tetraalkylboric acid. The conductive layer is composed of a metal selected from the group consisting of silver, gold, nickel, copper, cadmium, lead and platinum. It is desirable that the functional groups to be combined with boron are oleophilic. Degree of the oleophilicity depends on a relation between the ionization series of borate ion and that of functional groups to be combined with boron when the functional groups to be combined with boron are alkyl groups ($C_nH_{2n+1}$), it is preferable that n is 1 - 10. Particularly useful alkyl group include, for example, a methyl group ($CH_3$), an ethyl group ($C_2H_5$), a propyl group ($C_3H_7$) and a butyl group ($C_4H_9$). Alkyl groups ($C_nH_{2n+1}$; n = 1 - 10), whose hydrogen atoms H are partially or entirely replaced with halogen Y, wherein Y is F, Br, Cl or I, that is, halogenated alkyl groups, can be used. When the functional groups to be combined with boron are phenyl groups, derivatives of tetraphenylboric acid having phenyl groups combined with halogen atoms, Y at an ortho, meta or para position or derivatives of tetraphenylboric acid having phenyl groups combined with a halogenated alkyl group, i.e. an alkyl group whose hydrogen atoms H are at least partially replaced by halogen atoms Y, at an ortho, meta or para position are desirable.

To prepare the present inner solid state electrode, an organic solvent is used as a solvent for dissolving a metal salt of tetraphenylboric acid, tetraalkyl boric acid or their derivatives. It is preferable from the viewpoint of ionization of the metal salt as much as possible that the organic solvent has a larger relative dielectric constant. Alcohols, nitriles, amides, sulfur compounds, etc. are suitable as the organic solvent. Useful organic solvents include, for example, ethanol (24.6), methanol (32.7), 1-propanol (20.3), acetonitrile (37.5), propionitrile (27.2), formamide (111), N-methylformamide (182.4), dimethylformamide (36.7), dimethyl sulfoxide (46.7), nitromethane (36.7), nitrobenzene (34.8), propylene carbonate (64.92) and formic acid (57.9), where figure in parenthesis is a relative dielectric constant at 20°C or 25°C.

The larger the thickness of the metal salt layer, the longer the time until an ion equilibrium is established between the layer of a salt of a metal and the ion-selective membrane. Thus, it is preferable that total thickness of the layer of a metal and the layer of a salt of the metal in the layer structure of metal/metal salt is not more than 500 μm and the thickness of the layer of a salt of the metal is 10 to 50% of that of the layer of the metal. It is not necessary that the entire surface of the layer of the metal is completely covered by the layer of a salt of the metal. That is, not more than 50% of the surface of the layer of the metal is preferably covered by the layer of a salt of the metal. The layer of a metal can be a thin film formed on an electrically insulating film by vacuum evaporation of the metal. The insulating film includes, preferably, films of cellulose acetate, polyethylene terephthalate, polycarbonate, polystyrene, etc. The structure of the entire ion-selective electrode can be not only in a plate shape, but also in a wire shape. That is, a wire-shaped ion-selective electrode can be prepared by laminating a layer of a salt of metal and an ion-selective membrane successively in this order onto a portion of a metal wire serving as both layer of a metal and a lead wire.

PREFERRED EMBODIMENTS OF THE INVENTION

The present invention will be described in detail below, referring to Examples, Comparative Example and Drawings.

Example 1

A silver plate (0.2 mm thick; 10 mm × 10 mm square), pretreated with concentrated nitric acid as an anode and a platinum wire (0.5 mm in diameter; 50 mm long) as a cathode were subjected to an electrodeposition in a 1 mM solution of potassium tetraphenylborate represented by the following structural formula (7) in methyl alcohol by applying a voltage of about 1.5 V therebetween for about 30 minutes. After the electrodeposition, the anode was washed with water and dried, whereby an inner solid state electrode in the structure of silver/silver tetraphenylborate was obtained.

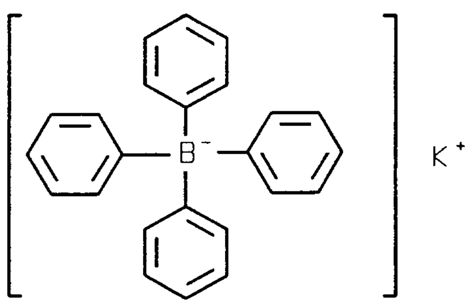

(7)

The thus obtained inner solid state electrode in the structure of silver/silver tetraphenylborate was adhered to a potassium ion selective membrane having the following composition to prepare a potassium ion-selective electrode ①.

Composition of potassium ion-selective membrane:
Valinonicin : 4.7% by weight
Polyvinyl chloride : 94.8% by weight
Didodecyl phthalate : 0.5% by weight

Example 2

A potassium ion-selective electrode ② was prepared from the same materials in the same manner as in Example 1 except that potassium tetrakis(4-fluorophenyl)borate having the following structural formula (8) was used. In this Example, an inner solid state electrode in such a structure as silver/silver tetrakis(4-fluorophenyl)borate was obtained.

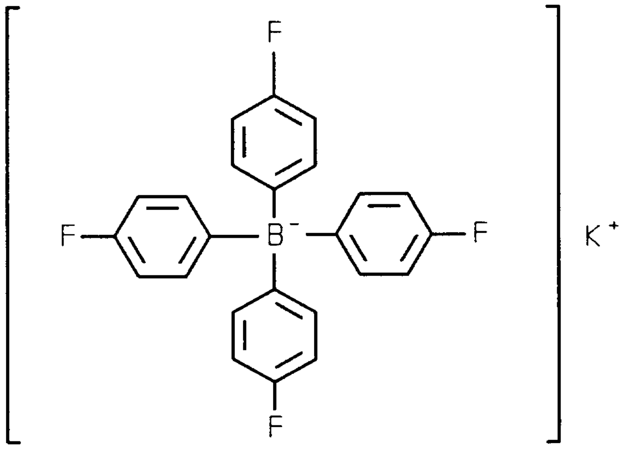

(8)

Example 3

A potassium ion-selective electrode ③ was prepared from the same materials in the same manner as in Example 1 except that potassium tetrakis(4-chlorophenyl)borate having the following structural formula (9) was used. In this Example, an inner solid state electrode in such a structure as silver/silver tetrakis(4-chlorophenyl)borate was obtained.

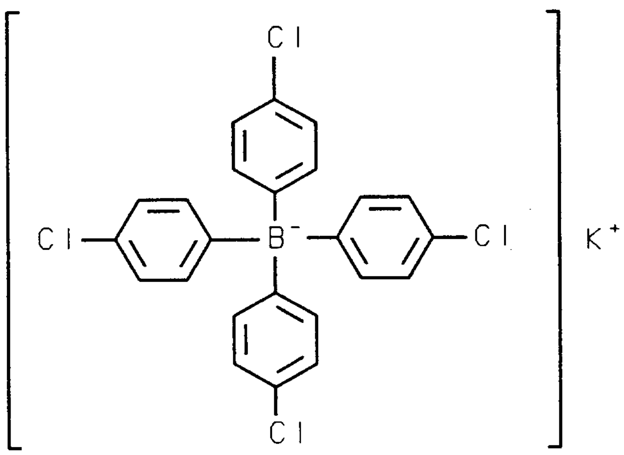

(9)

Example 4

A potassium ion-selective electrode ④ was prepared from the same materials in the same manner as in Example 1 except that potassium tetrakis[3,5-bis(trifluoromethyl)phenyl]borate having the following structural formula (10) was used. In this Example, an inner solid state electrode in such a structure as silver/silver tetrakis[3,5-bis(trifluoromethyl)-phenyl]borate was obtained.

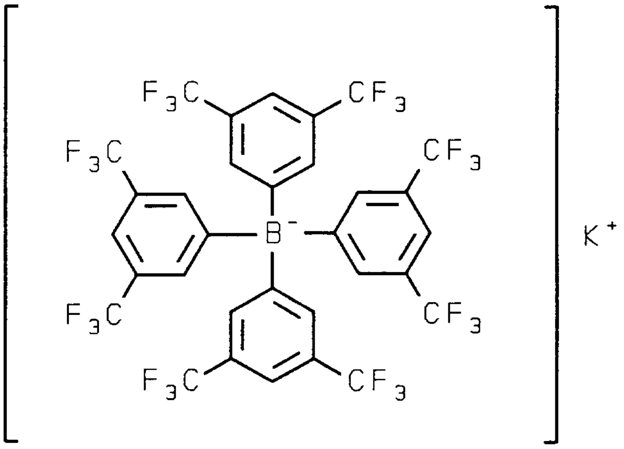

(10)

Example 5

The ion-selective electrodes ①, ②, ③ and ④ prepared in Examples 1 to 4, respectively, were evaluated to determine potassium concentrations in aqueous test solutions having different potassium concentrations. Results of repeatability of determined potassium concentrations are shown in the following Table 1, where "No." designates "test solution No."; "test concentration" designates "potassium concentration of the aqueous solution prepared for the test"; and "CV" designates "coefficient of variation".

Table 1

| No. | Potassium concentration (mM) | | Runs of determination | CV (%) |
|---|---|---|---|---|
| | Test concentration | Average of determined concentrations | | |
| 1 | 1.50 | 1.49 | 10 | 0.52 |
| 2 | 2.00 | 2.02 | 10 | 0.60 |
| 3 | 3.00 | 3.01 | 10 | 0.41 |

Example 6

A potassium ion-selective electrode was prepared from the same material in the same manner as in Example 1 except that acetonitrile was used in place of methyl alcohol as a solvent for dissolving potassium tetraphenylborate at a concentration of 1 mM. The thus prepared potassium ion-selective electrode was evaluated in the same manner as in Example 5. The results are shown in the following Table 2, where "No." designifies "test solution No."; "test concentration" designates "potassium concentration of the aqueous solution prepared for the test"; and "CV" designates "coefficient of variation".

Table 2

| No. | Potassium concentration (mM) | | Runs of determination | CV (%) |
|---|---|---|---|---|
| | Test concentration | Average of determined concentrations | | |
| 1 | 1.50 | 1.53 | 10 | 0.67 |
| 2 | 2.00 | 2.02 | 10 | 0.55 |
| 3 | 3.00 | 3.03 | 10 | 0.61 |

Example 7

A potassium ion-selective electrode was prepared from the same material in the same manner as in Example 2 except that acetonitrile was used in place of methyl alcohol as a solvent for dissolving potassium tetrakis(4-fluorophenyl)borate at a concentration of 1 mM. The thus prepared potassium ion-selective electrode was evaluated in the same manner as in Example 5.

The similar results as in Example 6 were obtained.

Example 8

A potassium ion-selective electrode was prepared from the same material in the same manner as in Example 3 except that acetonitrile was used in place of methyl alcohol as a solvent for dissolving potassium tetrakis(4-chlorophenyl)borate at a concentration of 1 mM. The thus prepared potassium ion-selective electrode was evaluated in the same manner as in Example 5.

The similar results as in Example 6 were obtained.

Example 9

A potassium ion-selective electrode was prepared from the same material in the same manner as in Example 4 except that acetonitrile was used in place of methyl alcohol as a solvent for dissolving potassium tetrakis[3,5-bis(trifluoromethyl)phenyl]borate at a concentration of 1 mM. The thus prepared potassium ion-selective electrode was evaluated in the same manner as in Example 5.

The similar results as in Example 6 were obtained.

Example 10

An inner solid state electrode in such a structure as silver/silver tetraphenylborate was prepared from the same materials in the same manner as in Example 1. The thus obtained inner solid state electrode of silver/silver tetraphenylborate was adhered to a sodium ion-selective membrane having the following composition to prepare a sodium ion-selective electrode ⑤:

Composition of sodium ion-selective membrane:
Methylmonensin : 4.7% by weight
Polyvinyl chloride : 94.8% by weight
Phenyl dicresylphosphate : 0.5% by weight

Example 11

A sodium ion-selective electrode ⑥ having an inner solid state electrode of silver/silver tetrakis(4-fluorophenyl)borate was prepared from the same materials in the same manner as in Example 10 except that potassium tetrakis(4-fluorophenyl)borate having the structural formula (8) was used.

Example 12

A sodium ion-selective electrode ⑦ of silver/silver tetrakis(4-chlorophenyl)borate was prepared from the same materials in the same manner as in Example 10 except that potassium tetrakis(4-chlorophenyl)borate having the structural formula (9) was used.

Example 13

A sodium ion-selective electrode ⑧ of silver/silver tetrakis[3,5-bis(trifluoromethyl)phenyl]borate was prepared from the same materials in the same manner as in Example 10 except that potassium tetrakis[3,5-bis(trifluoromethyl)phenyl]borate having the structural formula (10) was used.

Example 14

The ion-selective electrodes ⑤, ⑥, ⑦ and ⑧ prepared in Examples 10 to 13, respectively, were evaluated to determine sodium concentrations in aqueous test solutions having different sodium concentrations. Results of repeatability of determined sodium concentrations are shown in the following Table 3,

where "No." designates "test solution No."; "test concentration" designates "sodium concentration of the aqueous solution prepared for the test"; and "CV" designates "coefficient of variation".

Table 3

| No. | Sodium concentration (mM) | | Runs of determination | CV (%) |
|---|---|---|---|---|
| | Test concentration | Average of determined concentrations | | |
| 1 | 110.0 | 111.2 | 10 | 0.75 |
| 2 | 125.0 | 126.5 | 10 | 0.82 |
| 3 | 140.0 | 139.1 | 10 | 0.79 |

Example 15

A sodium ion-selective electrode containing silver/silver tetraphenylborate was prepared from the same material in the same manner as in Example 10 except that acetonitrile was used in place of methyl alcohol as a solvent for dissolving potassium tetraphenylborate at a concentration of 1 mM. The thus prepared sodium ion-selective electrode was evaluated in the same manner as in Example 14. The results are shown in the following Table 4, where "No." designifies "test solution No."; "test concentration" designates "sodium concentration of the aqueous solution prepared for the test"; and "CV" designates "coefficient of variation".

Table 4

| No. | Sodium concentration (mM) | | Runs of determination | CV (%) |
|---|---|---|---|---|
| | Test concentration | Average of determined concentrations | | |
| 1 | 110.0 | 112.3 | 15 | 0.77 |
| 2 | 125.0 | 126.7 | 15 | 0.85 |
| 3 | 140.0 | 138.8 | 15 | 0.82 |

Example 16

A sodium ion-selective electrode containing silver/silver tetrakis(4-fluorophenyl)borate was prepared from the same material in the same manner as in Example 11 except that acetonitrile was used in place of methyl alcohol as a solvent for dissolving potassium tetrakis(4-fluorophenyl)borate at a concentration of 1 mM. The thus prepared sodium ion-selective electrode was evaluated in the same manner as in Example 14.

The similar results as in Example 15 were obtained.

Example 17

A sodium ion-selective electrode containing silver/silver tetrakis(4-chlorophenyl)borate was prepared from the same material in the same manner as in Example 12 except that acetonitrile was used in place of methyl alcohol as a solvent for dissolving potassium tetrakis(4-chlorophenyl)borate at a concentration of 1 mM. The thus prepared sodium ion-selective electrode was evaluated in the same manner as in Example 14.

The similar results as in Example 15 were obtained.

Example 18

A sodium ion-selective electrode containing silver/silver tetrakis[3,5-bis(trifluoromethyl)phenyl]borate was prepared from the same material in the same manner as in Example 13 except that acetonitrile was used in place of methyl alcohol as a solvent for dissolving potassium tetrakis[3,5-bis(trifluoromethyl)phenyl]-borate at a concentration of 1 mM. The thus prepared sodium ion-selective electrode was evaluated in the same manner as in Example 14.

The similar results as in Example 15 were obtained.

Comparative Example

A silver plate (0.2 mm thick; 10 mm × 10 mm square), pretreated with a concentrated nitric acid as an anode and a platinum wire (0.5 mm in diameter; 50 mm long) as a cathode were subjected to an electrodeposition in an aqueous 1 mM potassium chloride solution by applying a potential of about 0.7 V therebetween. After the electrodeposition, the anode was washed with water and dried, whereby an inner solid state electrode of silver/silver chloride was obtained.

The thus obtained inner solid state electrode was adhered to a potassium ion-selective membrane having the same composition as in Example 1 to prepare a conventional potassium ion-selective electrode.

Comparison in the effect will be shown below between the present ion-selective electrodes and the conventional one, referring to the foregoing Examples and Comparative Example.

Changes with time in the electrode potential were investigated with the present ion-selective electrodes ① (Example 1), ② (Example 2), ⑤ (Example 10), and ⑥ (Example 11) and the conventional ion-selective electrode, when subjected to quantitative determination of potassium ions in an aqueous 100 mmol potassium chloride solution, and the results are shown in Fig. 2, where curves (a), (b), (c), (d) and (e) correspond to the results with the present electrodes ①, ②, ⑤ and ⑥, and the conventional electrode, respectively. A considerable decrease in the electrode potential is observable within a short time with the conventional ion-selective electrode, whereas no substantial decrease in the electrode potential is observable even after about 20 hours with all the present ion-selective electrodes. This shows that the ion equilibrium state is very stable between the ion-selective membrane and the inner solid state electrode.

Changes with time in the slope were sensitivity investigated with the present ion-selective electrodes ① (Example 1), ② (Example 2), ⑤ (Example 10) and ⑥ (Example 11) and the conventional ion-selective electrode, when subjected to quantitative determination of potassium ions in an aqueous 100 mmol potassium chloride solution, and the results are shown in Fig. 3, where curves (a), (b), (c), (d) and (e) correspond to the results with the present electrodes ①, ②, ⑤ and ⑥, and the conventional electrode, respectively. The slope sensitivity is unstable and is lowered within a relatively short time with the conventional ion-selective electrode, whereas the slope sensitivity is very stable for a long time over about 5 months with all the present ion-selective electrodes.

Changes with time in the electrode potential drift were investigated with the present ion-selective electrodes ① (Example 1), ② (Example 2), ⑤ (Example 10) and ⑥ (Example 11) and the conventional ion-selective electrode, when subjected to quantitative determination of potassium ions in an aqueous 100 mmol potassium chloride solution, and the results are shown in Fig. 4, where curves (a), (b), (c), (d) and (e) correspond to the results with the present electrodes ①, ②, ⑤ and ⑥, and the conventional electrode, respectively.

The electrode potential is unstable with a large drift with the conventional ion-selective electrode, whereas the fluctuation of the electrode potential drift is very small for a long time over 45 hours with all the present ion-selective electrodes.

Thus, the present ion-selective electrodes can maintain a stable electrode performance over a prolonged time, as compared with the conventional ion-selective electrode.

The present invention provides a practical ion-selective electrode workable for a prolonged time.

## Claims

1. An ion-selective electrode which comprises an inner solid state electrode (3) in a layer structure of metal/metal salt composed of a conductive layer (6) of a metal and a layer (7) of a water-insoluble salt of the metal in contact with the conductive layer and ion-selective membrane (4) whose matrix membrane is composed of a hydrophobic polymeric material, where the anion of the water-insoluble salt is selected from the group consisting of tetraphenylborate ion, derivatives of the tetraphenylborate ion, tetraalkylborate ion and derivatives of the tetraalkylborate ion.

**2.** The electrode of claim 1, wherein not more than 50% of the surface of the metal layer (6) is covered by the layer (7) of the water-insoluble salt of the metal.

**3.** The electrode of claim 1 or 2, wherein the thickness of the layer (7) of the water-insoluble salt of the metal is in a range of 10 to 50% of the thickness of the metal layer (6).

**4.** The electrode of any one of claims 1 to 3, wherein the total thickness of the metal layer (6) and the layer (7) of the water-insoluble salt of the metal is not more than 500 $\mu$m.

**5.** An ion-selective electrode which comprises an inner solid state electrode (3) in a layer structure of metal/metal salt composed of a conductive layer (6) of a metal and a layer (7) of a water-insoluble salt of the metal in contact with the conductive layer and an ion-selective membrane (4) whose matrix membrane is composed of a hydrophobic polymeric material, where the metal is silver; the water-insoluble salt of the metal is one member selected from the group consisting of silver tetraphenylborate, silver tetrakis(4-fluorophenyl) borate, silver tetrakis(4-chlorophenyl)borate, and silver tetrakis[3,5-bis(trifluoromethyl)phenyl]borate; and the ion-selective membrane is a potassium ion-selective membrane or a sodium ion-selective membrane.

**6.** A process for preparing an ion-selective electrode, which comprises a step of forming an inner solid state electrode (3) in a layer structure of metal/metal salt composed of a conductive layer (6) of a metal and a layer (7) of a water-insoluble salt of the metal in contact with the conductive layer and a step of forming an ion-selective membrane (4) whose matrix membrane is composed of a hydrophobic polymeric material on the surface of the inner solid state electrode, where the inner solid state electrode (3) is formed by subjecting the metal to an electrodeposition in a solution of a salt of the metal with an anion selected from the group consisting of tetraphenylborate ion, derivatives of the tetraphenylborate ion, tetraalkylborate ion and derivatives of the tetraalkylborate ion and silver tetrakis-[3,5-bis(trifluoromethyl)phenyl]-borate ion in a solvent having a relative dielectric constant of 20 or more, thereby forming an insoluble salt of the metal on the surface of the metal.

**7.** The process of claim 6, wherein the solvent is one member selected from the group consisting of methanol, ethanol, 1-propanol, acetonitrile, nitromethane, nitrobenzene, formamide, propylene carbonite, dimethyl sulfoxide and formic acid.

**8.** The process of claim 6 or 7, wherein not more than 50% of the surface of the metal layer (6) is covered by the layer (7) of water-insoluble salt of the metal by the electrodeposition.

**9.** The process of any one of claims 6 to 8, wherein the layer (7) of the water-insoluble salt of the metal is formed to a thickness in a range of 10 to 50% of the thickness of the metal layer (6) by the electrodeposition.

**10.** The process of any one of claims 6 to 9, wherein the metal layer (6) and the layer (7) of the water-insoluble salt of the metal are formed to a total thickness of not more than 500 $\mu$m by the electrodeposition.

**11.** The electrode of any one of claims 1 to 4 or the process of any one of claims 6 to 10, wherein the metal is silver and the water-insoluble salt of the metal is one member selected from the group consisting of silver tetraphenylborate, silver tetrakis(4-fluorophenyl)borate, silver tetrakis(4-chloro-phenyl)-borateand silver tetrakis[3,5-5bis(trifluoromethyl)phenyl]borate.

**12.** A process for preparing an ion-selective electrode, which comprises a step of forming an inner solid state electrode (3) in a layer structure of metal/metal salt composed of a conductive layer (6) of a metal and a layer (7) of a water-insoluble salt of the metal in contact with the conductive layer and a step of forming ion-selective membrane (4) whose matrix membrane is composed of a hydrophobic polymeric material on the surface of the inner solid state electrode, where the inner solid state electrode (3) is formed by subjecting silver as the metal to an electrodeposition in a solution of a salt of the silver selected from the group consisting of silver tetraphenylborate, silver tetrakis(4-fluorphenyl)borate, silver tetrakis(4-chlorophenyl)borate and silver tetrakis[3,5-bis(trifluoromethyl)phenyl]borate in a solvent having a relative dielectric constant of 20 or more, selected from the group consisting of methanol, ethanol, 1-propanol, acetonitrile, nitromethane, nitrobenzene, formamide, propylene carbonate, dimethyl sulfoxide and formic acid, thereby forming a water-insoluble salt of the metal on the surface of the metal.

**13.** The electrode of any one of claims 1 to 5 and 11, or the process of any one of claims 6 to 12, wherein the metal is one member selected from the group consisting of silver, gold, nickel, copper, cadmium, lead and platinum.

**14.** The electrode of any one of claims 1 to 5, 11 and 13 or the process of any one of claims 6 to 13, wherein the ion-selective membrane is a potassium ion-selective membrane or a sodium ion-selective membrane.

FIG. 1

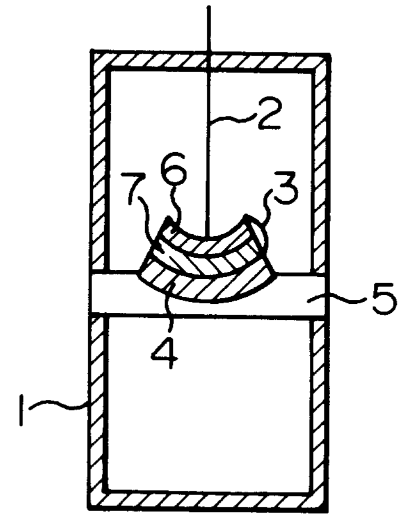
2
7
6
3
5
4
1

FIG. 2

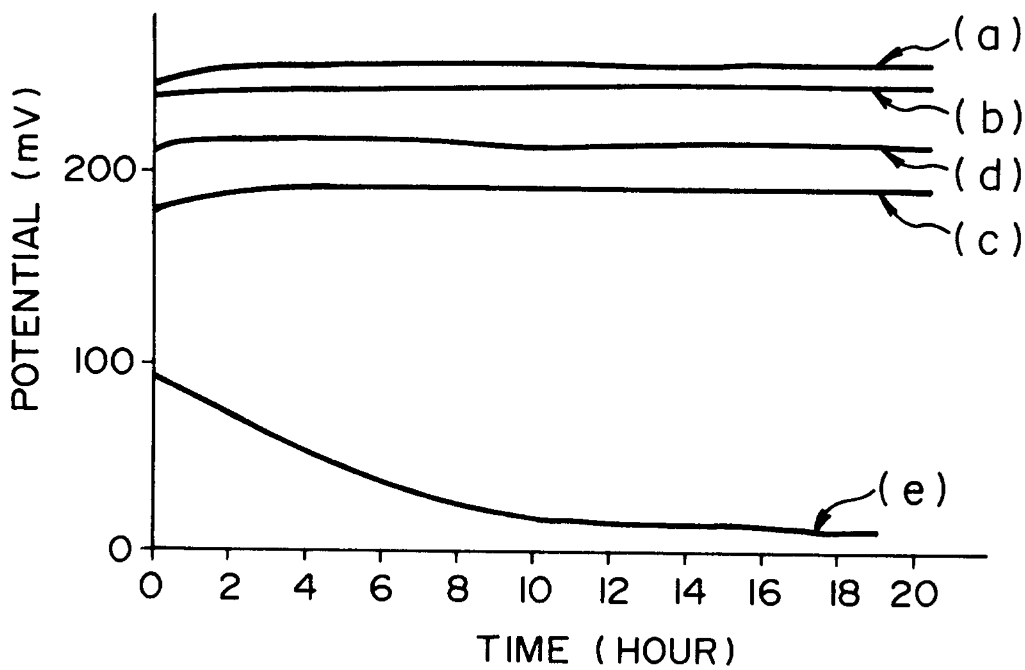
(a)
(b)
(d)
(c)
(e)
POTENTIAL (mV)
200
100
0
0
2
4
6
8
10
12
14
16
18
20
TIME (HOUR)

FIG. 3

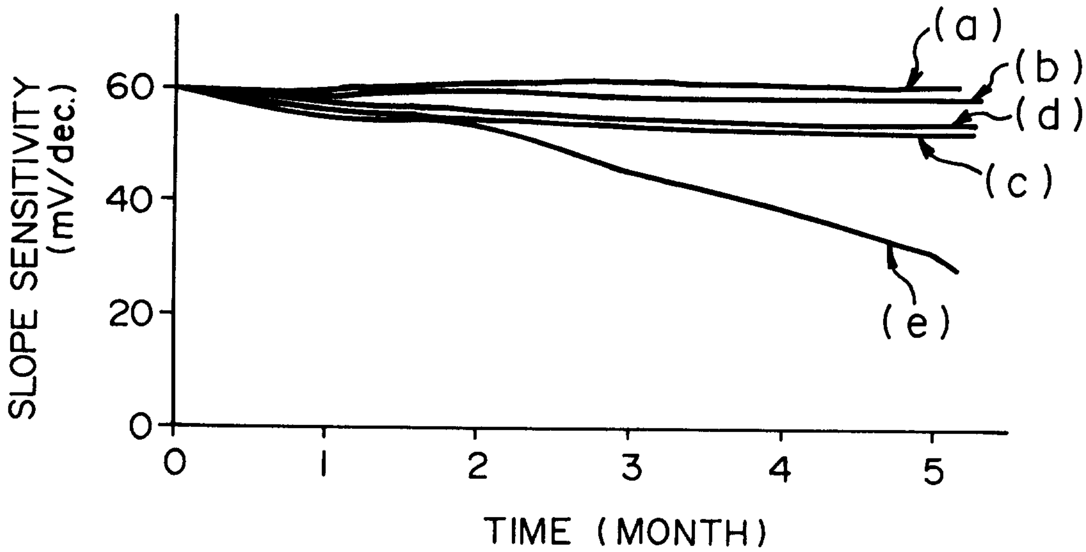
SLOPE SENSITIVITY (mV/dec.)
60
40
20
0
0
1
2
3
4
5
TIME (MONTH)
(a)
(b)
(d)
(c)
(e)

FIG. 4

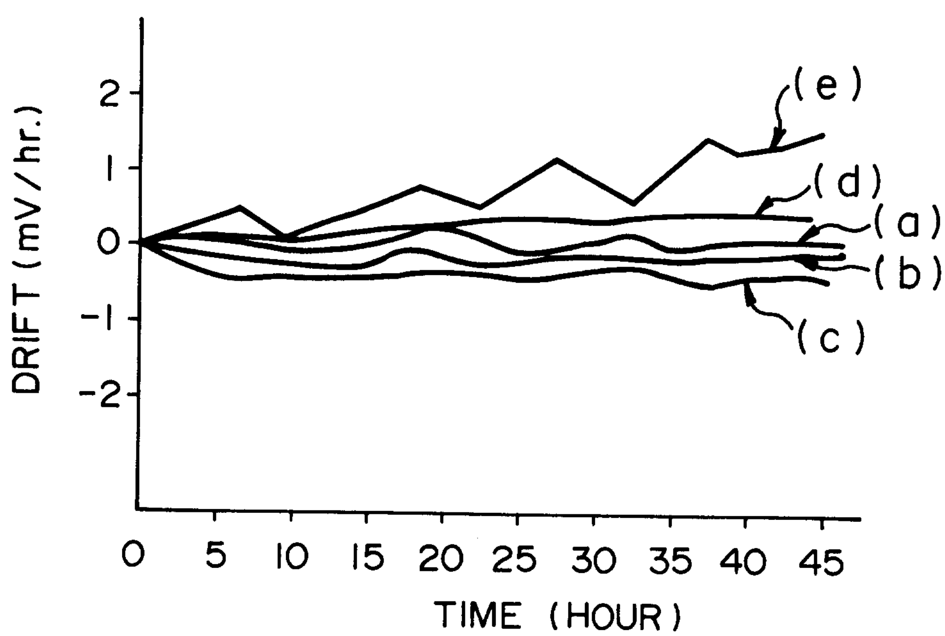
DRIFT (mV/hr.)
2
1
0
-1
-2
0
5
10
15
20
25
30
35
40
45
TIME (HOUR)
(e)
(d)
(a)
(b)
(c)

European Patent Office

# EUROPEAN SEARCH REPORT

Application Number
EP 94 10 4331

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | GB-A-1 593 270 (ST. THOMAS HOSPITAL MEDICAL SCHOOL)<br>* page 1, line 20 - line 24 *<br>--- | 1 | G01N27/333 |
| Y | EP-A-0 193 676 (GOULD INC.)<br>* abstract; figure 1 *<br>--- | 1 | |
| A | EP-A-0 291 904 (ABBOTT LABORATORIES)<br>* abstract *<br>--- | 1,2,8 | |
| A | EP-A-0 024 192 (EASTMAN KODAK COMPANY)<br>* abstract; figure 1 *<br>--- | 1,5 | |
| A | DATABASE WPI<br>Week 8806,<br>Derwent Publications Ltd., London, GB;<br>AN 88041210<br>& SU-A-1 318 898 (MOSC AGRIC ACAD)<br>* abstract *<br>--- | 6 | |
| A | DATABASE WPI<br>Week 8624,<br>Derwent Publications Ltd., London, GB;<br>AN 86153597<br>& JP-A-61 088 134 (SHIMADZU SEISAKUSHO KK)<br>* abstract *<br>----- | 6,7 | TECHNICAL FIELDS SEARCHED (Int.Cl.5)<br>G01N |

The present search report has been drawn up for all claims

| Place of search | Date of completion of the search | Examiner |
|---|---|---|
| THE HAGUE | 13 July 1994 | Kempf, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)